# EUROPEAN PATENT APPLICATION

(11) **EP 2 548 688 A1**
(43) Date of publication of application: **23.01.2013**
(21) Application number: 12176543.2
(22) Date of filing: 16.07.2012
(51) Int. Cl.: B23K 11/14, B23K 11/20, B23K 11/093

(54) **Tight connection between a copper capillary duct and an aluminium duct, in particular for cooling circuits**

(30) Priority: 18.07.2011 IT MI20111331
(71) Applicant: Sim Meccanica S.r.l., 21020 Ternate (VA) (IT)
(72) Inventor: Zocchi, Tiziano, 21020 Bregano (VA) (IT); Depalo, Pasquale, 28822 Cannobio (VB) (IT)
(74) Representative: Lotti, Giorgio

(57) **Abstract**

The invention concerns a tight connection (10) between a copper capillary duct (11) and an aluminium duct (12) realized through the formation of an eutectic copper-aluminium alloy by heating and subsequently cooling of free ends (13, 14) of said ducts (11, 12) placed in contact, in which:
- the free end (13) of said aluminium duct (12) is cylindrical in the absence of tapered or divergent portions;
- the free end (14) of said copper capillary duct (11) is cylindrical in the absence of tapered or divergent portions;
- said free end (14) of said copper capillary duct (11) having external diameter lower than the internal diameter of said aluminium duct (12) so that said copper capillary duct (11) can insert prior to the final assembly without interference into said aluminium duct (12) up to at least one external superficial projection (15) obtained on said free end (14) of said copper capillary duct (11);
- said at least one external superficial projection (15) being forced into said aluminium duct (12) through heating of said ducts (11, 12) for realizing said junction eutectic copper-aluminium alloy at said at least one external superficial projection (15).

## Description

The present invention refers to a tight connection between a copper capillary duct and an aluminium duct. More in particular the connection according to the present invention concerns the formation of cooling circuits in which the aluminium duct represents the end of the circuit of the evaporator, usually in the shape of a coil.

Nowadays, various methods are known for tight connecting ducts, in copper and aluminium, respectively, to one another, in which the junction between the materials is obtained by heating their ends that are placed in contact with one another so as to generate an eutectic copper-aluminium alloy that acts as a tight junction between the ducts.

As an example, patents US3040427, US5549335 and US5338072 describe different connections of the type described above indeed obtained by generating a junction eutectic copper-aluminium alloy.

Document US6654995 describes a connection wherein the junction eutectic alloy of the ducts is made at a projection of the internal tube in contact with the internal wall of the external tube.

The production process described in US6654995 first requires forcing the two ducts one inside the another so as to reach their final position and, only in such a condition, generating the eutectic alloy for current to pass through.

However, all the connections described in such patents of the prior art, as well as the production method described in US6654995, do not work in the case in which the copper duct is of the capillary type, wherein by the term capillary we mean that the internal diameter of such a duct is comprised between the values 0.1 mm and 1.5 mm.

Indeed, by analysing US3040427 and US5338072, such patents describe connections in which the end of the aluminium duct is inserted inside the copper duct.

It is immediately clear that such a coupling step is extremely complex in the case in which the copper duct is capillary since any coupling realised between the aluminium tube and the end of the capillary tube could risk occluding the copper duct and such a obstruction could not be eliminated by subsequent operations.

For such simple reasons the teachings which can be inferred by US3040427 and US5338072 do not offer any help in finding a solution to the problem of creating a simple tight connection between a copper capillary duct and an aluminium duct.

By analysing US5549335 it is clearly visible how also such a patent cannot provide any aid to the predetermined purpose of the present invention, or rather of making a tight connection between a copper capillary duct and an aluminium duct.

Indeed US5549335 describes a connection in which the copper duct has a tapered end which must be inserted by interference into the end of the aluminium duct.

Also in such a case it is clear that if the copper duct is of the capillary type, if the end is machined in order to taper it, there would unavoidably be the risk of occluding the copper duct itself; such a risk is heightened by the further constriction that the duct necessarily undergoes during the insertion by interference into the aluminium duct.

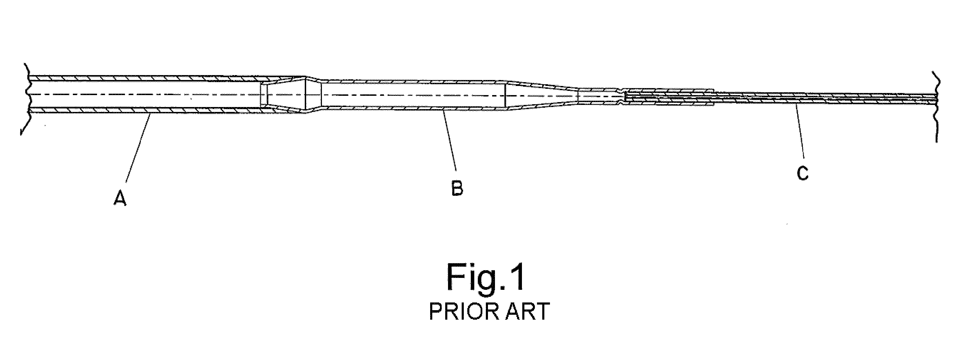

The only solution known today in the case in which the copper duct is of the capillary type, foresees, as shown in figure 1, the presence of a junction element B made from copper between the aluminium duct A and the capillary one made from copper C.

According to such a solution the copper junction, since it is not capillary, can easily be connected to the aluminium duct on one side, for example through one of the methods described in patents US3040427, US5549335 and US5338072, and on the opposite side it can be connected to the copper capillary duct by using braze welding process.

However, the connection described above cannot do without the presence of the copper junction with consequent increase of the costs both in terms of materials and in terms of time needed to obtain the connection.

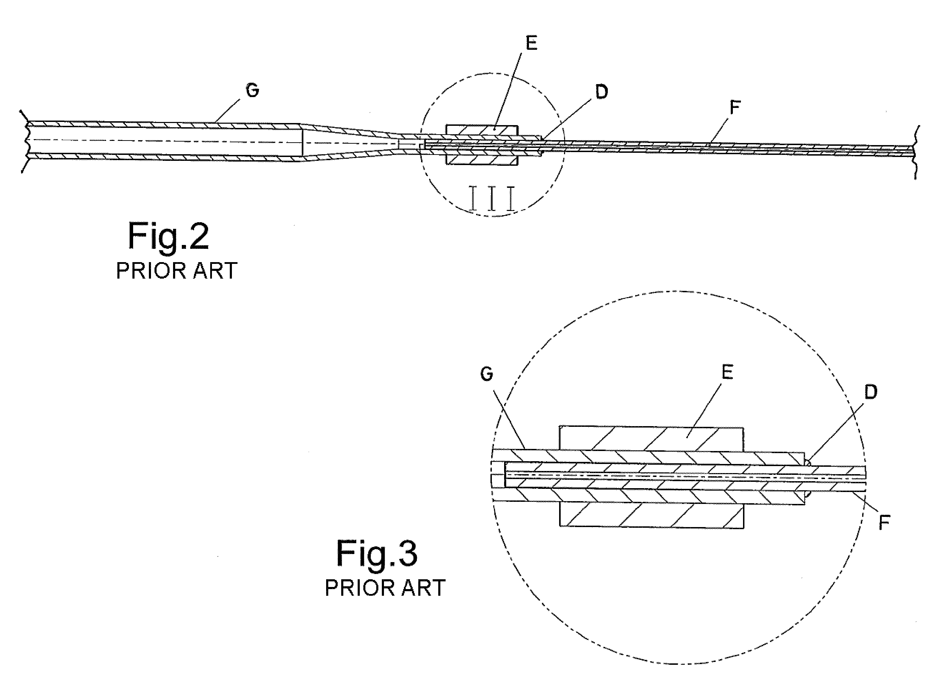

A second known method provided, as shown in figure 2, making a mechanical junction through special glues D and an external ring E which mechanically clamps the capillary tube F inserted into the aluminium tube G.

The method described, with respect to the welded junction is mechanically less resistant and requires great expertise in order to ensure the hermetic seal of the junction.

Also the realising method described in US6654995 does not work in the case of capillary ducts. Indeed by forcing the insertion of the copper duct prior to the passage of current, the later risks being deformed and obstructing the small passage provided, of the order of 1 mm.

The purpose of the present invention is that of making a tight connection between a copper capillary duct and an aluminium duct that is capable of solving the drawbacks mentioned above of the prior art in an extremely simple, cost-effective and particularly functional manner.

Another purpose is that of making a tight connection between a copper capillary duct and an aluminium duct which does not require the presence of any junction element.

Another purpose is that of devising a method for obtaining the tight connection between a copper capillary duct and an aluminium duct in which there is not the risk of obstructing the capillary duct.

These purposes according to the present invention are achieved by making a tight connection between a copper capillary duct and an aluminium duct as outlined in claim 1.

Further characteristics of the invention are highlighted in the dependent claims.

The characteristics and the advantages of a tight connection between a copper capillary duct and an aluminium duct according to the present invention shall become clearer from the following description, given as an example and not for limiting purposes, with reference to the attached schematic drawings, in which:
- figure 1 is a view of a tight connection between a copper capillary duct and an aluminium duct according to the prior art;
- figure 2 is a view of a tight mechanical connection between a copper capillary duct and an aluminium duct according to the prior art;

- figure 3 is an enlarged view of the detail indicated with III in figure 2.

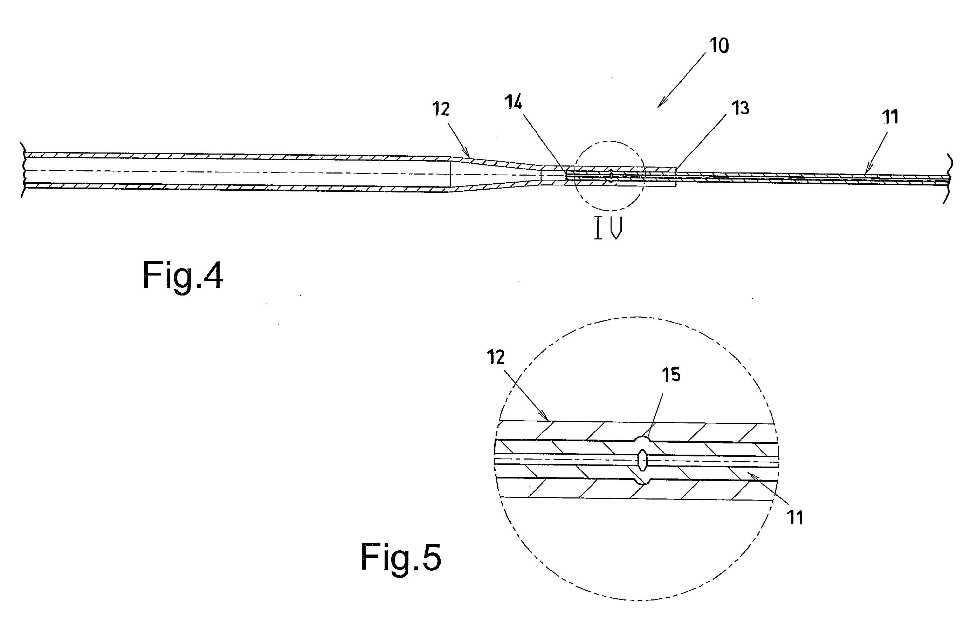

- figure 4 is a view of a tight connection between a copper capillary duct and an aluminium duct according to the present invention;
- figure 5 is an enlarged view of the detail indicated with IV in figure 4; and
- figure 6 shows how the ducts are positioned before the welding is carried out.

With reference to the figures, reference numeral 10 shows one embodiment of a hermetic connection, wherein by hermetic we mean the type for sealing gases or fluids, between a copper capillary duct and an aluminium duct according to the present invention.

As visible in the figures, according to the invention it is possible to obtain a tight connection 10 between a copper capillary duct 11 and an aluminium duct 12 without any junction in which the joining is realized through the formation of an eutectic copper-aluminium alloy by heating and subsequent cooling the free ends 13, 14 of the ducts 11, 12 themselves.

In order to obtain this advantageous result it is required that:
- the free end 13 of the aluminium duct 12 is cylindrical in the absence of tapered or divergent portions;
- the free end 14 of the copper capillary duct 11 is in turn cylindrical in the absence of tapered or divergent portions;
- such a free end 14 of the copper capillary duct 11 has an external diameter that is lower than the internal diameter of the aluminium duct 12 so that the copper capillary duct 11 can be inserted without interference into the aluminium duct 12; and that
- the free end 14 of the copper capillary duct 11 comprises at least one external superficial projection 15 of contact with the internal surface of the aluminium duct 12 so that the junction eutectic copper-aluminium alloy is obtained right at the least one external superficial projection 15.

In particular by copper capillary duct 11 we mean a duct that is provided with an internal diameter comprised between the values 0.1 mm and 1.5 mm.

In relation to the values indicated above, for the purposes of the invention, the copper capillary duct 11 can have an external diameter that is comprised between the values 1 mm and 3.5 mm, whereas the aluminium duct 12 can have an internal diameter of between 1.2 mm and 4 mm.

Finally, purely as an example, the at least one external superficial projection 15 can be a circumferential projection.

It is very simple to understand how a tight connection between a copper capillary duct and an aluminium duct object of the invention can be achieved.

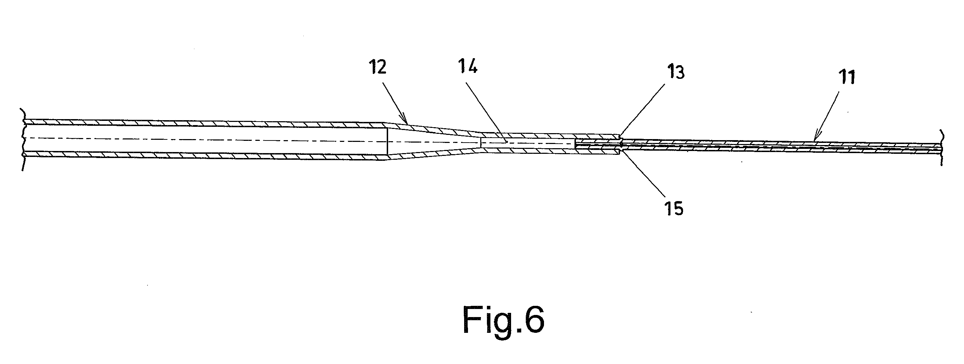

Indeed, in order to obtain a connection as previously described, it is sufficient to carry out the operative steps of:
- inserting the end 14 of the copper capillary duct 11 into the end 13 of the aluminium duct 12 so that the external superficial projection 15 is in contact with the end 13 of the aluminium duct 12 itself, as highlighted in figure 6;
- simultaneously axially pushing the two ducts 11, 12, one against the other at a suitable pressure and heating the ducts 11, 12, so as to heat them up to the eutectic fusion temperature which allows the co-penetration of the two tubes and the simultaneous generation of an eutectic copper-aluminium alloy at the contact points between the external superficial projection 15 and the internal wall of the aluminium duct 12.

Preferably such a step of heating the ducts 11, 12 can be obtained by making current circulate inside the ducts 11, 12.

In such a case it is preferable to arrange the end 13 of the aluminium duct 12 in a ceramic support so as to suitably distribute the heat between the two ducts. Indeed, without this ceramic support the passage of current could "burn" the aluminium tube without obtaining the eutectic copper-aluminium welding alloy. With respect to the document of the prior art US6654995, the circulation of current is carried out during the co-penetration of the ducts. Indeed, since the copper duct is of the capillary type, the "dry" co-penetration of the ducts could deform the copper duct itself occluding the passage.

In other words the method described in US6654995 is suitable for medium and large sized ducts, or rather in the order of at least 5mm, but for smaller sizes there is the risk of obstructing the passage and making the connection useless.

On the other hand, the method of the present invention allows to achieve such a connection also for capillary ducts thanks to the simultaneousness of the steps of axially pushing the two ducts 11, 12 one against the other and heating the ducts 11, 12 up to the eutectic temperature.

Indeed, only in such conditions the capillary copper duct "slides" into the aluminium duct without the danger of the passage being obstructed.

It has thus been seen that the tight connection between a copper capillary duct and an aluminium duct according to the present invention achieve the purposes previously highlighted.

Indeed the tight connection between a copper capillary duct and an aluminium duct according to the present invention does not require any junction element even if the copper duct is of the capillary type and the risk of obstruction of the passage through deformation of the copper capillary duct is avoided.

The tight connection between a copper capillary duct and an aluminium duct of the present invention thus conceived can undergo numerous modifications and variants, all covered by the same inventive concept; moreover, all the details can be replaced by technically equivalent elements.

## Claims

1. Method for obtaining a hermetic connection (10) between a copper duct (11) having an internal diameter comprised between the values 0.1 mm and 1.5 mm and an external diameter comprised between the values 1 mm and 3.5 mm and an aluminium duct (12) having an internal diameter of between 1.2 mm and 4 mm through the formation of an eutectic copper-aluminium alloy by heating and subsequently cooling the free ends (13, 14) of said ducts (11, 12) placed in contact, wherein:
- the free end (13) of said aluminium duct (12) is cylindrical in the absence of tapered or divergent portions;
- the free end (14) of said copper capillary duct (11) is cylindrical in the absence of tapered or divergent portions;
- said free end (14) of said copper capillary duct (11) having external diameter lower than the internal diameter of said aluminium duct (12) so that said copper capillary duct (11) can insert prior to the final assembly without interference into said aluminium duct (12) up to said at least one external circumferential superficial projection (15) obtained on said free end (14) of said copper capillary duct (11);
- said at least one external circumferential superficial projection (15) being forced into said aluminium duct (12) through heating of said ducts (11, 12) for realizing said junction eutectic copper-aluminium alloy at said at least one external circumferential superficial projection (15); said method comprising the steps of:
- inserting said end (14) of said copper capillary duct (11) into said end (13) of aluminium duct (12) so that said external circumferential superficial projection (15) is outside and in contact with the end (13) of said aluminium duct (12);
- simultaneously axially pushing said ducts (11, 12) one against the other and heating said ducts (11, 12) up to the eutectic fusion temperature to permit the co-penetration of said ducts (11, 12) and the simultaneous co-penetration of the ducts during the generation of an eutectic copper-aluminium alloy at the contact points between said external circumferential superficial projection (15) and said internal wall of said aluminium duct (12).

2. Method according to claim 1 **characterised in that** said heating step of said ducts (11, 12) comprises the step of circulating current in said ducts (11, 12).

3. Method according to claim 1 **characterised in that** it comprises the preliminary step of placing said end (13) of aluminium duct (12) in a ceramic support.
